# FASCICULE DE BREVET EUROPEEN

(11) **EP 3 508 377 B1**
(45) Date de publication et mention de la délivrance du brevet: **07.09.2022**
(21) Numéro de dépôt: 18211966.9
(22) Date de dépôt: 12.12.2018
(51) Int. Cl.: B60Q 1/04

(54) **BOITIER DE BLOC OPTIQUE ET PATTE DE FIXATION DE SUBSTITUTION POUR LA REPARATION D'UN TEL BLOC OPTIQUE DE VEHICULE**
GEHÄUSE FÜR OPTISCHEN BLOCK UND ERSATZ-BEFESTIGUNGSLASCHE ZUM REPARIEREN EINES SOLCHEN OPTISCHEN FAHRZEUGBLOCKS
HOUSING FOR AN OPTICAL UNIT AND REPLACEMENT ATTACHMENT TAB FOR REPAIRING SUCH AN OPTICAL UNIT OF A VEHICLE

(30) Priorité: 05.01.2018 FR 1850092
(43) Date de publication de la demande: 10.07.2019
(73) Titulaire: PSA Automobiles SA, 78300 Poissy (FR)
(72) Inventeur: PERON, Rodolphe, 95220 HERBLAY (FR)

(56) Documents cités:
- EP-B1- 2 802 484
- GB-A- 2 506 206
- JP-A- 2001 158 285
- JP-A- 2015 098 256
- US-A1- 2002 145 881
- US-A1- 2016 082 878
- US-B1- 6 257 749

## Description

L'invention concerne, de façon générale, le domaine des blocs optiques pour véhicules automobiles et se rapporte plus particulièrement à un bloc optique présentant une réparabilité améliorée d'une patte de fixation frangible dudit bloc optique, après rupture de ladite patte de fixation frangible, notamment lors d'un choc avec un piéton.

Un véhicule automobile comprend de manière connue des blocs optiques ou projecteurs montés à l'avant et à l'arrière dudit véhicule. Ces blocs optiques permettent, d'une part, d'éclairer l'environnement du véhicule pour améliorer la visibilité du conducteur, notamment en condition nocturne, et, d'autre part, de signaliser la position du véhicule aux autres usagers de la route.

Chaque bloc optique comprend une ou plusieurs pattes de fixation permettant de fixer le bloc optique sur le véhicule. Dans une forme connue de bloc optique, une patte de fixation frangible permet de fixer le bloc optique à une aile du véhicule à l'aide de vis et d'écrous, tout en étant configurée pour se rompre lors d'un choc, afin de permettre le déplacement du bloc optique, en vue de minimiser le risque de blessure en cas de choc impliquant un piéton et afin de réduire le risque de casse du bloc optique, notamment en cas de choc peu intense. En raison de cette fonction, ce type de patte de fixation frangible est également désigné patte de fixation « fusible ».

En pratique, par conséquent, lors d'un choc avec un piéton, la partie éclairage ou signalisation lumineuse est indemne mais la patte de projecteur s'est rompue en quasi-totalité et doit donc être réparée. Pour réparer la patte de projecteur cassée, on doit en général complètement et proprement découper la patte de projecteur cassée pour ensuite ajouter une patte de substitution rapportée vissée. La réparation engendre une perte de temps et de matière.

Dans l'état de l'art, il est connu du document FR 2897804 un dispositif de protection d'une patte de fixation frangible, dans le cas d'un choc entre un véhicule automobile et un piéton. Cependant, un tel dispositif ne permet pas d'assurer une réparation à moindre coût en cas de rupture de la patte de fixation.

En effet, dans l'état de la technique, il est nécessaire de retailler le boîtier du bloc optique afin que le logement laissé libre par la rupture de la patte de fixation frangible d'origine corresponde bien aux dimensions de la patte de substitution généralement disponible dans un kit de réparation.

**Il est également connu du document** US2002/145881 **un boîtier pour bloc optique adapté pour accueillir une patte de réparation. La mise en place de la patte de substitution au moyen de vis de fixation et d'un logement prévu dans la patte pour venir chevaucher une rainure ne permet toutefois pas d'assurer un positionnement aussi précis que souhaité.**

Toujours dans l'état de l'art, les pattes de fixation de substitution, également désignées « pattes réparations », sont généralement surdimensionnées afin de garantir que ses dimensions seront suffisantes quel que soit le niveau exact où la patte de fixation frangible s'est rompue. Elles sont par conséquent assez encombrantes dans un kit de réparation et nécessitent des opérations d'usinage du boîtier pour permettre leur insertion en cas de réparation.

L'invention a pour but de remédier à ces inconvénients, notamment en proposant de minimiser la taille de la patte de fixation de substitution, en ciblant parfaitement la zone de la patte de fixation frangible qui se rompt lors du choc. Cela permet de disposer de boîtiers de bloc optique plus simples et plus rapides à réparer en cas de rupture d'une patte de fixation frangible. En outre, le kit de réparation associé pourra être produit à coût réduit.

A cet effet, l'invention concerne un boîtier bloc optique selon la revendication 1.

De préférence, la patte de substitution associée est fabriquée en même temps que la patte de fixation frangible d'origine afin de s'assurer qu'elles sont identiques.

Selon l'invention, la zone persistante de la patte de fixation frangible comprend un fût de fixation pour permettre la fixation de la patte de fixation de substitution dans le logement.

Selon un mode de réalisation, ledit boîtier comprend par ailleurs une patte de fixation de substitution, destinée à remplacer la zone de rupture de la patte de fixation frangible en cas de rupture de ladite patte de fixation frangible, ladite patte de fixation de substitution étant fixée sur une paroi du boîtier.

La présente invention concerne en outre une patte de fixation de substitution selon la revendication 3.

La présente invention vise aussi un véhicule automobile selon la revendication 4.

L'invention sera mieux comprise à la lecture de la description qui va suivre, donnée uniquement à titre d'exemple, et se référant aux dessins annexés sur lesquels :
- la figure 1 représente un boîtier de bloc optique non conforme à l'invention mais utile pour comprendre celle-ci,
- la figure 2 illustre une vue de près d'une patte de fixation frangible du boitier de la figure 1,
- la figure 3 représente une vue de la zone de rupture de la patte de fixation frangible,
- la figure 4 montre une patte de fixation de substitution, conformément à l'invention,
- la figure 5 représente un ensemble d'un boîtier non conforme à l'invention, dont a rompu la patte de fixation frangible et une patte de fixation de substitution prêtée à être logée dans le logement laissé libre,
- la figure 6 montre une vue arrière d'une patte de fixation de substitution,
- la figure 7 représente une vue de prêt d'une patte de fixation de substitution insérée dans un logement laissé libre par la rupture d'une patte de fixation frangible d'un boîtier de bloc optique.

Dans ce qui va suivre, les exemples décrits s'attachent plus particulièrement à une mise en œuvre du dispositif selon l'invention au sein d'un véhicule automobile. Cependant, toute mise en œuvre dans un contexte différent, en particulier dans tout type de véhicule, est également visée par la présente invention.

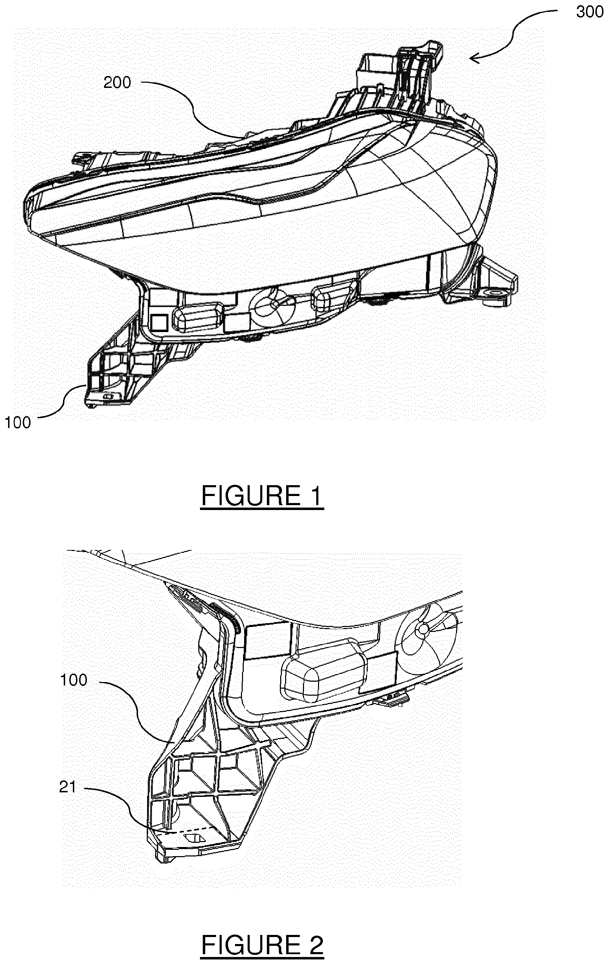

La figure 1 représente partiellement un bloc optique destiné à être monté sur la structure de support d'un véhicule automobile (non représenté), par exemple sur une aile avant dudit véhicule ou toute autre élément adapté de la structure du véhicule. Le bloc optique 300 se présente sous la forme d'un élément allongé s'étendant selon un axe longitudinal.

Sur l'ensemble des figures, on définit un repère orthogonal (X, Y, Z) où :
- X est un premier axe qui est parallèle à l'axe longitudinal du véhicule automobile lorsque le bloc optique est monté sur ledit véhicule,
- Y est un deuxième axe qui est parallèle à l'axe longitudinal du bloc optique,
- Z est un troisième axe qui est parallèle à la verticale terrestre.

Sur la figure 1, le bloc optique 300, comprend un boîtier 200, une patte de fixation frangible 100, solidaire dudit boîtier 200 afin de permettre la fixation du bloc optique 300 sur la structure d'un véhicule automobile.

Toujours en référence à la figure 1, sur le boîtier 200, par exemple réalisé en un matériau plastique, est montée une paroi transparente, non représentée sur la figure 1, également désignée « glace », par exemple réalisée en un matériau plastique, de manière à former un volume intérieur du boîtier 200 apte à recevoir une source de lumière, non représentée sur la figure 1. La paroi transparente est destinée à permettre le passage de la lumière produite par la source de lumière afin d'éclairer l'environnement du véhicule ou de signaler une information relative au véhicule.

Dans cet exemple, le bloc optique 300 comprend une patte de fixation frangible 100, destinée à se trouver orientée vers l'arrière du bloc optique 300, c'est-à-dire vers l'extérieur lorsque le bloc optique 300 est installé sur un véhicule.

Il va de soi que le bloc optique 300 peut comprendre un nombre différent de pattes de fixation, frangibles ou non, solidaires du boîtier ou rapportées sur celui-ci, sans que cela ne limite la portée de la présente invention.

En référence à la figure 2, lors d'un choc, notamment à faible vitesse et impliquant un piéton, la patte de fixation frangible 100 se rompt et le bloc optique subit un déplacement. Selon l'invention, la patte de fixation frangible 100 comprend une ligne de prédécoupe 21 délimitant une zone de rupture de la patte de fixation frangible 100. En cas de choc, ladite patte de fixation frangible 100 se rompt aisément au niveau de la ligne de prédécoupe 21. La rupture de la patte de fixation frangible 100, comme expliqué précédemment, autorise un déplacement du boîtier 200 du bloc optique 300, afin d'amortir le choc et de réduire le risque de blessure pour un piéton éventuellement impliqué et également de réduire le risque de casse du bloc optique 300, notamment en cas de choc peu intense.

Grâce à la ligne de prédécoupe 21, qui favorise la rupture de la patte de fixation frangible 100 selon cette ligne, la zone de rupture, correspondant à la partie de la patte de fixation frangible 100 et donc du boîtier 200 destinée à rompre en cas de choc, est précisément délimitée.

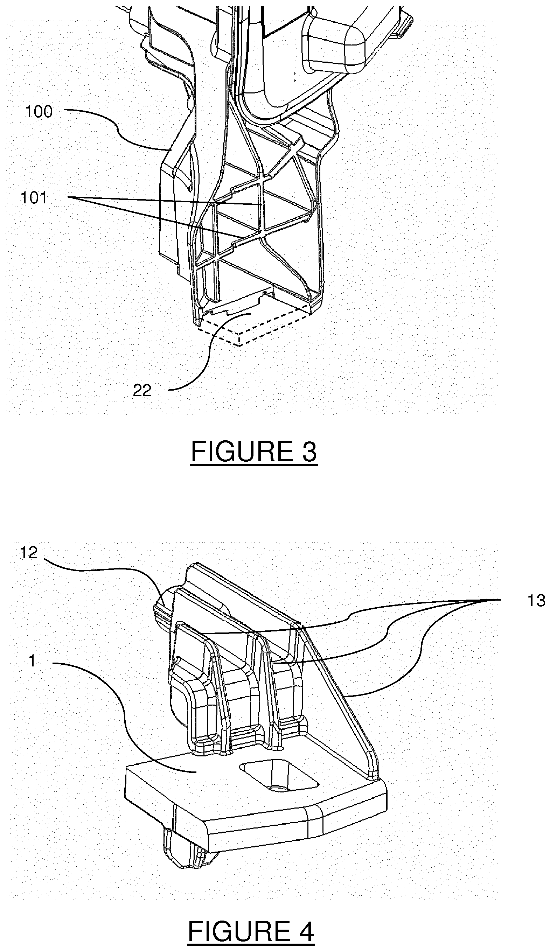

En référence à la figure 3, ladite patte de fixation frangible 100 est aussi dimensionnée de sorte que la ligne de prédécoupe 21 soit positionnée de telle manière que ladite zone de rupture 22 soit de dimensions réduites, de sorte que les dimensions de la patte de fixation de substitution restent réduites également. Ainsi, seulement la zone de rupture 22, autrement dit l'extrémité externe de la patte fixation frangible 100 délimitée par la zone de prédécoupe 21 se rompt lors d'un choc. La zone de rupture 22 est configurée pour être plus petite que celle existant dans l'état de l'art, où une partie plus importante de la patte de fixation avait tendance à rompre, en l'absence de la zone de prédécoupe 21, et devait être réparée.

On désigne par la suite « zone persistante » la partie restante de la patte de fixation frangible 100 après rupture de la zone de rupture 22. Autrement dit, la zone persistante correspond à la partie de la patte de fixation frangible 100, et donc du boîtier 200, qui reste partie intégrante du boîtier après rupture de la zone de rupture 22 située au-delà de la ligne de prédécoupe 21 par rapport au boîtier 200.

En référence aux figures 4 à 7, après la rupture de ladite patte de fixation frangible 100, une patte de fixation de substitution 1 est prévue, configurée pour remplacer la zone de rupture 22 de la patte de fixation frangible 100 d'origine. Conformément à l'invention, en référence à la figure 4, la patte de fixation de substitution 1 est de préférence conçue et fabriquée simultanément à la patte de fixation frangible 100 d'origine.

En référence à la figure 3, la patte de fixation frangible 100 d'origine comprend en outre un réseau de nervures de rigidification 101. Ce réseau de nervures de rigidification 101 assure plusieurs fonctions. Notamment, lesdites nervures de rigidification 101 permettent de renforcer et de soutenir la patte de fixation frangible 100, et donc de rigidifier la structure de ladite patte de fixation frangible 100.

Après rupture de la patte de fixation frangible 100 selon la ligne de prédécoupe 21, la part du réseau de nervures de rigidification 101 appartenant à la zone persistante assure la liaison entre ladite zone persistante et la patte de fixation de substitution 1.

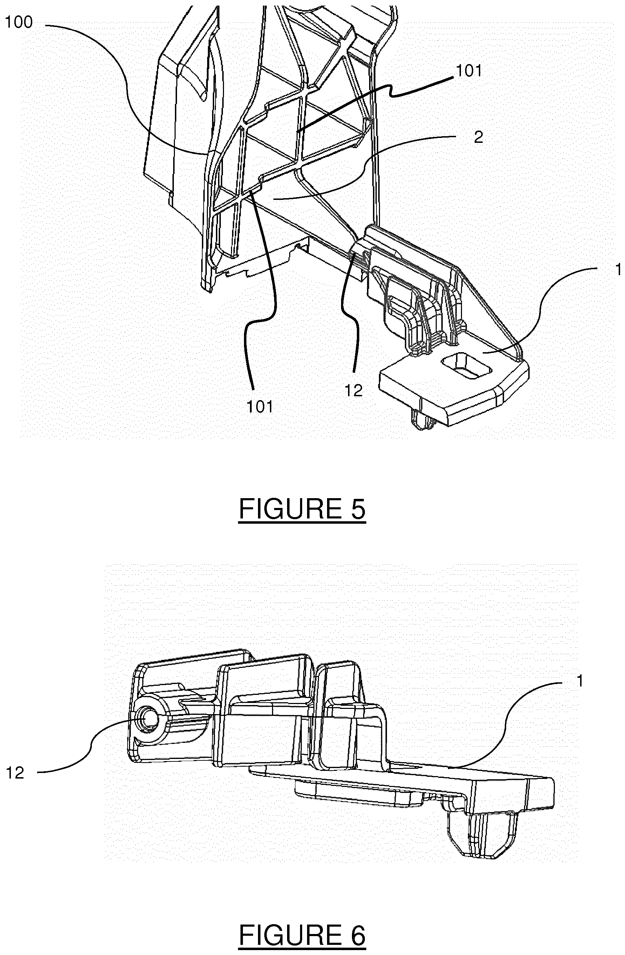

En référence à la figure 5, après rupture de la patte de fixation frangible 100 au niveau de la ligne de prédécoupe 21, un logement 2, correspondant à la zone de rupture, est rendu libre et destiné à recevoir la patte de fixation de substitution 1.

La part des nervures de rigidification 101 appartenant à la zone persistante de la patte de fixation frangible 100 délimite ledit logement 2 et permet le guidage en insertion et le maintien dans ledit logement 2 de ladite patte de fixation de substitution 1.

La patte de fixation de substitution 1 comprend au moins une nervure 13, configurée pour coopérer avec la part des nervures de rigidification 101 délimitant ledit logement 2. La liaison mécanique entre la zone persistante de la patte de fixation frangible 100 et la patte de fixation de substitution 1 est par conséquent assurée par ladite au moins une nervure 13 et par ladite part du réseau de nervures de rigidification 101 appartenant à la zone persistante.

Une fois la patte de fixation de substitution 1 insérée à force dans le logement 2, ladite au moins une nervure 13 de la patte de fixation de substitution 1 est configurée pour se trouver dans le prolongement de l'une au moins des parties de nervures du réseau de nervures 101 appartenant à la zone persistante, de façon à permettre d'inhiber tout degré de liberté de mobilité entre la zone persistante de la patte de fixation frangible 100 et la patte de fixation de substitution 1. Autrement dit, la coopération entre ladite au moins une nervure 13 de la patte de fixation de substitution 1 et les parties de nervures correspondantes de la part du réseau de nervures de rigidification 101 appartenant à la zone persistante assure la mise en contrainte de la patte de fixation de substitution 1 dans le logement 2 et garantit l'isostatisme de l'ensemble formé du boîtier 200 et de la patte de fixation de substitution 1 insérée dans le logement 2.

Après avoir inséré la patte de fixation de substitution 1 dans ledit logement 2 de la zone persistante de la patte de fixation frangible 100, il est prévu de fixer définitivement ces deux parties entre elles.

A cette fin, la patte de fixation de substitution 1 et la patte de fixation frangible 100 présentent selon l'invention chacune un fût de fixation. En référence aux figures 5 et 6, la patte de fixation de substitution 1 présente un fût de fixation 12.

Selon l'invention, la zone persistante de la patte de fixation frangible 100 présente un fût non débouchant destiné à se trouver en vis-à-vis du fût 12 aménagé dans la patte de fixation de substitution 1 lorsque ladite patte de fixation de substitution 1 est insérée dans le logement 2. Ce fût non débouchant (non représenté) est alors percé au moment du passage d'une vis de fixation entre ledit fût non débouchant de la patte de fixation frangible 100 et le fût de fixation 12 de la patte de fixation de substitution 1.

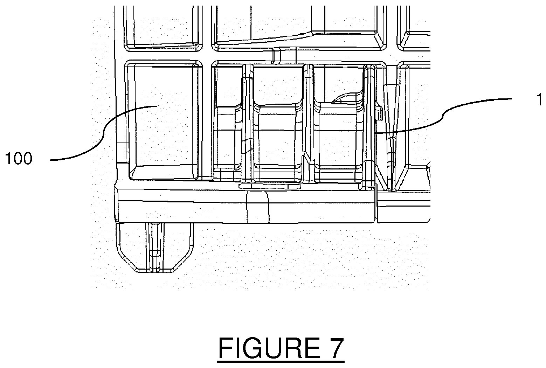

La figure 7 présente la position finale de la patte de fixation de substitution 1, placée dans le logement 2 de la zone persistante de la patte de fixation frangible 100.

Grâce à la présente invention, en cas de réparation nécessaire d'un bloc optique 300 suite à la rupture d'une patte de fixation frangible 100, la réparation de ladite patte de fixation frangible 100 est rendue plus simple et plus rapide. Ladite réparation assure par ailleurs une très bonne tenue la patte de fixation de substitution 1 sur le boîtier 200, et permet de retrouver les mêmes caractéristiques mécaniques.

En outre, grâce à l'invention, la patte de fixation de substitution 1 associée à cette patte de fixation frangible 100, présente des dimensions réduites par rapport à celles de l'état de l'art.

## Revendications

1. Boîtier (200) de bloc optique (300), ledit boîtier (200) comprenant une patte de fixation frangible (100) permettant la fixation du boîtier (200) à la structure d'un véhicule, ladite patte de fixation frangible (100) comprenant au moins une ligne de prédécoupe (21) configurée pour créer une zone de rupture (22) et pour délimiter ladite zone de rupture (22) de ladite patte de fixation frangible (100) destinée à rompre en cas de choc, **caractérisé en ce que** la patte de fixation frangible (100) **comprend,** au moins en partie sur une zone persistante distincte de la zone de rupture (22), un réseau de nervures de rigidification (101) configuré de sorte que, après rupture de la zone de rupture (22) de la patte de fixation frangible (100), les portions de nervures de rigidification (101) appartenant à la zone persistante définissent un logement (2) apte à recevoir une patte de fixation de substitution (1) et à assurer des fonctions de guidage en insertion et de maintien de ladite patte de fixation de substitution (1) destinée à être fixée au boîtier (200) en remplacement de la zone de rupture (22) de la patte de fixation frangible (100) rompue, **la zone persistante de la patte de fixation frangible 100 présentant un fût non débouchant destiné à se trouver dans le logement (2) en vis-à-vis d'un fût (12) aménagé dans la patte de fixation de substitution (1) lorsque ladite patte de fixation (1) est insérée dans ledit logement (2), ledit fût non débouchant étant destiné à être percé au moment du passage d'une vis de fixation entre ledit fût non débouchant de la patte de fixation frangible 100 et le fût de fixation 12 de la patte de fixation de substitution (1) lors de la mise en place de cette dernière.**

2. Boîtier (200) selon la revendication 1, comprenant par ailleurs une patte de fixation de substitution (1), destinée à remplacer la zone de rupture (22) de la patte de fixation frangible (100) en cas de rupture de ladite patte de fixation frangible (100), ladite patte de fixation de substitution (1) étant fixée sur une paroi du boîtier (200).

3. Patte de fixation de substitution (1), configurée pour être fixée à un boîtier (200) de bloc optique (300) selon la revendication 1, destinée à être insérée à force dans le logement (2) défini par les portions du réseau de nervures de rigidification (101) appartenant à la zone persistante, ladite patte de fixation de substitution (1) **comprenant un fût de fixation (12) pour permettre la fixation entre la patte de fixation frangible (100) cassée et ladite patte de fixation de substitution (1) et** comprenant au moins une nervure (13) configurée pour se trouver en **contact** d'une portion de nervure du réseau de nervures de rigidification (101) pour assurer la mise en contrainte de ladite patte de fixation de substitution (1) dans ledit logement (2) **et garantir l'isostatisme de l'ensemble formé du boîtier (200) et de la patte de fixation de substitution 1 insérée dans ledit logement (2).**

4. Véhicule automobile présentant une structure et comprenant au moins boîtier de bloc optique (300) selon la revendication 1 ou 2, edit boîtier de bloc optique (300) étant fixé à la structure du véhicule automobile.

## Patentansprüche

1. Gehäuse (200) einer optischen Einheit (300), wobei das Gehäuse (200) eine zerbrechliche Befestigungslasche (100) umfasst, die die Befestigung des Gehäuses (200) an der Struktur eines Fahrzeugs ermöglicht, wobei die zerbrechliche Befestigungslasche (100) mindestens eine Vorschneidelinie (21) umfasst, die so konfiguriert ist, dass sie eine Bruchzone (22) erzeugt und die Bruchzone (22) von der zerbrechlichen Befestigungslasche (100) abgrenzt, die im Fall eines Aufpralls brechen soll, **dadurch gekennzeichnet, dass** die zerbrechliche Befestigungslasche (100) zumindest teilweise auf einem von der Bruchzone (22) getrennten persistenten Bereich eine Anordnung von Versteifungsrippen (101) umfasst, die so konfiguriert ist, dass nach dem Bruch der Bruchzone (22) der zerbrechlichen Befestigungslasche (100), die Abschnitte der Versteifungsrippen (101), die zur persistenten Zone gehören, eine Aufnahme (2) definieren, die geeignet ist, eine Ersatzbefestigungslasche (1) aufzunehmen und Funktionen der Führung beim Einführen und des Haltens der Ersatzbefestigungslasche (1) zu gewährleisten, die dazu bestimmt ist, am Gehäuse (200) als Ersatz für die Bruchzone (22) der gebrochenen zerbrechlichen Befestigungslasche (100) befestigt zu werden, der persistente Bereich der zerbrechlichen Befestigungslasche (100) einen nicht durchgehenden Schaft aufweist, der dazu bestimmt ist, sich in der Aufnahme (2) gegenüber einem in der Ersatzbefestigungslasche (1) ausgebildeten Schaft (12) zu befinden, wenn die Befestigungslasche (1) in die Aufnahme (2) eingeführt wird, wobei der nicht durchgehende Schaft dazu bestimmt ist, zum Zeitpunkt des Durchgangs einer Befestigungsschraube zwischen dem nicht durchgehenden Schaft der zerbrechlichen Befestigungslasche 100 und dem Befestigungsschaft 12 der Ersatzbefestigungslasche (1) beim Einsetzen der Ersatzbefestigungslasche (1) durchbohrt zu werden.

2. . Gehäuse (200) nach Anspruch 1, ferner mit einer Ersatzbefestigungslasche (1), die dazu bestimmt ist, die Bruchzone (22) der zerbrechlichen Befestigungslasche (100) im Falle eines Bruchs der zerbrechlichen Befestigungslasche (100) zu ersetzen, wobei die Ersatzbefestigungslasche (1) an einer Wand des Gehäuses (200) befestigt ist.

3. . Ersatzbefestigungslasche (1), die so konfiguriert ist, dass sie an einem Gehäuse (200) einer optischen Einheit (300) nach Anspruch 1 befestigt werden kann, um mit Kraft in den Sitz (2) eingeführt zu werden, der durch die Abschnitte des Netzes von Versteifungsrippen (101) definiert ist, die zu dem persistenten Bereich gehören, wobei die Ersatzbefestigungslasche (1) einen Befestigungsschaft (12) umfasst, um eine Befestigung zwischen der gebrochenen zerbrechlichen Befestigungslasche (100) und der Ersatzbefestigungslasche (1) zu ermöglichen, und
mindestens eine Rippe (13) umfasst, die so konfiguriert ist, dass sie mit einem Rippenabschnitt des Netzes von Versteifungsrippen (101) in Kontakt steht, um die Einspannung der Ersatzbefestigungslasche (1) in der Aufnahme (2) zu gewährleisten und die Isostatik der aus dem Gehäuse (200) und der in die Aufnahme (2) eingesetzten Ersatzbefestigungslasche (1) gebildeten Einheit zu garantieren.

4. . Kraftfahrzeug mit einer Struktur und mit mindestens einem Gehäuse (300) für die optische Einheit nach Anspruch 1 oder 2, wobei das Gehäuse (300) für die optische Einheit an der Struktur des Kraftfahrzeugs befestigt ist.

## Claims

1. Housing (200) for an optical unit (300), the said housing (200) comprising a frangible fixing lug (100) enabling the housing (200) to be fixed to the structure of a vehicle, the said frangible fixing lug (100) comprising at least one precut line (21) configured to create a rupture zone (22) and to delimit the said rupture zone (22) from the said frangible fixing lug (100) intended to rupture in the event of an impact **characterized in that** the frangible bracket (100) comprises, at least in part over a persistent area distinct from the rupture area (22), a network of stiffening ribs (101) configured so that, after rupture of the rupture area (22) of the frangible bracket (100) the portions of the stiffening ribs (101) belonging to the persistent zone define a housing (2) capable of receiving a substitute fastening tab (1) and of ensuring functions of guiding in insertion and of holding said substitute fastening tab (1) intended to be fastened to the housing (200) in replacement of the fracture zone (22) of the broken frangible fastening tab (100) the persistent zone of the frangible fixing tab (100) having a non-through shaft intended to be located in the housing (2) opposite a shaft (12) provided in the substitute fixing tab (1) when the said fixing tab (1) is inserted into the said housing (2), the said non-through shaft being intended to be pierced when a fixing screw passes between the said non-through shaft of the frangible fixing bracket 100 and the fixing shaft 12 of the substitute fixing bracket (1) when the latter is fitted.

2. A housing (200) according to claim 1, further comprising a substitute attachment tab (1), intended to replace the breakage zone (22) of the frangible attachment tab (100) in the event of breakage of said frangible attachment tab (100), said substitute attachment tab (1) being attached to a wall of the housing (200).

3. Substitute attachment tab (1), configured to be attached to a housing (200) of an optical block (300) according to claims 1, intended to be forcibly inserted into the housing (2) defined by the portions of the network of stiffening ribs (101) belonging to the persistent zone, said substitute attachment tab (1) comprising an attachment shank (12) to allow attachment between the broken frangible attachment tab (100) and said substitute attachment tab (1) and
comprising at least one rib (13) configured to be in contact with a rib portion of the network of stiffening ribs (101) to ensure the constraint of said substitute fixing tab (1) in said housing (2) and to guarantee the isostatism of the assembly formed by the housing (200) and the substitute fixing tab (1) inserted in said housing (2).

4. Motor vehicle having a structure and comprising at least one optical block housing (300) according to claim 1 or 2, said optical block housing (300) being fixed to the structure of the motor vehicle.
